# EUROPEAN PATENT APPLICATION

(11) **EP 3 591 878 A1**
(43) Date of publication of application: **08.01.2020**
(21) Application number: 17901383.4
(22) Date of filing: 22.03.2017
(51) Int. Cl.: H04L 5/00, H04L 27/26, H04W 72/12

(54) **SIGNAL TRANSMISSION METHOD, APPARATUS, DEVICE, AND SYSTEM**

(71) Applicant: Huawei Technologies Co., Ltd., Longgang District Shenzhen, Guangdong 518129 (CN)
(72) Inventor: LI, Zhenyu, Shenzhen Guangdong 518129 (CN); LI, Hantao, Shenzhen Guangdong 518129 (CN)
(74) Representative: Gill Jennings & Every LLP
(86) International application number: PCT/CN2017/077673
(87) International publication number: WO 2018/170785

(57) **Abstract**

This application provides a signal transmission method, apparatus, and system, and a device. The method includes: determining, by a second access network device, that a first channel is idle; and sending, by the second access network device, first information that is used to indicate occupancy of the first channel, where the first information includes a first power value and first duration, and the first power value is power used by the second access network device to send a signal through the first channel in the first duration. Therefore, spectrum efficiency of an unlicensed spectrum is improved.

## Description

### TECHNICAL FIELD

The present invention relates to the field of communications technologies, and in particular, to a signal transmission method, apparatus, and system, and a device.

### BACKGROUND

Spectrums include a licensed spectrum and an unlicensed spectrum. Based on a sharing feature of the unlicensed spectrum, a plurality of operators, enterprises, or individuals may use the unlicensed spectrum.

Spectrums are a foundation of wireless communications. According to the latest International Spectrum White Paper issued by the Federal Communications Commission (Federal Communications Commission, FCC), a quantity of unlicensed (unlicensed) spectrum resources is larger than a quantity of licensed spectrum resources. Currently, a main technology used on the unlicensed spectrum is wireless fidelity (Wireless Fidelity, Wi-Fi). However, the Wi-Fi has disadvantages in mobility, security, quality of service (Quality of Service, QoS), and simultaneous processing of multi-user scheduling.

Currently, when an access network device (for example, a base station) needs to use a channel on the unlicensed spectrum, the access network device first detects energy on the channel, then determines, based on the energy on the channel, interference between the access network device and an access network device that has occupied the channel, and determines, based on the interference, whether to use the channel.

However, in an actual application process, because distances between access network devices are different, and uplink transmission and downlink transmission may occur at the same time, the access network device cannot accurately determine, based on the energy on the channel, the interference status between the access network device and the access network device that has occupied the channel. Consequently, the access network device cannot accurately determine, based on the detected energy on the channel, whether to use the channel.

It may be learned from the foregoing that the access network device cannot accurately determine, based on the detected energy on the channel, whether the access network device should use the unlicensed spectrum. Consequently, the access network device cannot properly use the unlicensed spectrum, and spectrum efficiency of the unlicensed spectrum is relatively low.

### SUMMARY

This application provides a signal transmission method, apparatus, and system, and a device, so as to improve spectrum efficiency of an unlicensed spectrum.

According to a first aspect, this application provides a signal transmission method. The method is executed by a second access network device. When the second access network device determines that a first channel is idle, the second access network device sends first information that is used to indicate occupancy of the first channel. The first information includes a first power value and first duration. The second access network device sends a first signal through the first channel in the first duration. The first power value is power used by the second access network device to send a signal through the first channel in the first duration.

In the foregoing process, after the second access network device sends the first information that is used to indicate occupancy of the first channel, another access network device may determine, based on the first information sent by the second access network device, maximum transmit power of a signal transmitted through the first channel, so that when the another access network device uses the first channel based on the determined maximum transmit power, interference to the second access network device can be avoided. Therefore, an access network device can properly use an unlicensed spectrum, thereby improving spectrum efficiency of the unlicensed spectrum.

In a possible implementation, before the second access network device determines that the first channel is idle, the second access network device may determine, in real time, whether there is to-be-transmitted information. When the second access network device determines that there is a to-be-transmitted first signal, the second access network device may perform detection on the first channel, to determine whether the first channel is idle.

Optionally, the second access network device may determine, in the following at least two feasible implementations, whether the first channel is idle.

In one feasible implementation, the second access network device obtains energy received on the first channel, and determines that the energy received on the first channel is less than a preset threshold.

In the other feasible implementation, the second access network device determines that information used to indicate occupancy of the first channel in the first preset duration is not received.

In another possible implementation, after the first duration ends, the second access network device stops sending the first signal through the first channel.

In another possible implementation, the first information further includes uplink-downlink subframe configuration, and the uplink-downlink subframe configuration is used to indicate a time period in which the second access network device sends a downlink signal through the first channel and a time period in which the second access network device receives an uplink signal through the first channel. In this way, when another access network device also sends a signal through the first channel in the first duration, a time period in which the another access network device sends a downlink signal and a time period in which the another access network device receives an uplink signal may be determined with reference to the uplink-downlink subframe configuration, so as to avoid uplink and downlink interference when the another access network device and the second access network device simultaneously use the first channel.

According to a second aspect, this application provides a signal transmission method. The method is executed by a first access network device. When the first access network device needs to use a first channel, the first access network device obtains first information sent by a second access network device. The first information includes a first power value and first duration. The first access network device determines a second power value. The second power value is a power value that is received by the first access network device in the first duration and that is used by the second access network device to transmit a signal through the first channel. The first power value and the second power value are used by the first access network device to compute path loss information between the first access network device and the second access network device.

In the foregoing process, after determining the path loss information, the first access network device may determine, based on the path loss information, maximum transmit power used to transmit a signal through the first channel. When the first access network device sends a signal through the first channel by using an actual transmit power value that is less than or equal to the maximum transmit power value, interference caused by the first access network device to the second access network device is less than or equal to a preset maximum interference power value, thereby avoiding affecting normal communication of the second access network device. Therefore, the first access network device may use an unlicensed spectrum to a greatest extent without affecting the second access network device, thereby improving spectrum efficiency of the unlicensed spectrum.

In a possible implementation, after the first access network device determines the second power value, the method further includes:
determining, by the first access network device, a preset maximum interference power value; and
determining, by the first access network device, a maximum transmit power value of the first access network device based on the path loss information and the preset maximum interference power value.

In another possible implementation, after the determining, by the first access network device, a maximum transmit power value of the first access network device based on the path loss information and the preset maximum interference power value, the method further includes:
determining, by the first access network device based on the maximum transmit power value, whether the first channel needs to be occupied; and
if yes, sending, by the first access network device, a signal based on the maximum transmit power value through the first channel in second duration.

Optionally, the first access network device may determine, in the following feasible implementation, whether the first channel needs to be occupied.

The first access network device determines a signal coverage area of the first access network device based on the maximum transmit power value. The first access network device determines whether there is a third access network device in the signal coverage area. There is a to-be-transmitted signal between the third access network device and the first access network device. If yes, the first access network device determines that the first channel needs to be occupied.

Optionally, the first access network device may send a signal through the first channel in the following feasible implementation. The first access network device sends the to-be-transmitted signal or first scheduling information to the third access network device by using an actual transmit power value that is less than or equal to the maximum transmit power value through the first channel in the second duration. The first scheduling information is used to instruct the third access network device to send the to-be-transmitted signal to the first access network device through the first channel.

Optionally, the sending, by the first access network device, the to-be-transmitted signal or first scheduling information to the third access network device by using an actual transmit power value that is less than or equal to the maximum transmit power value through the first channel in the second duration includes:
obtaining, by the first access network device, a distance between the third access network device and the first access network device;
determining, by the first access network device, the actual transmit power value based on the distance between the third access network device and the first access network device; and
when the to-be-transmitted signal is a signal that needs to be sent by the first access network device, sending, by the first access network device, the to-be-transmitted signal to the third access network device by using the actual transmit power value through the first channel; or
when the first scheduling information is a signal that needs to be sent by the first access network device, sending, by the first access network device, the first scheduling information to the third access network device by using the actual transmit power value through the first channel.

In another possible implementation, after the determining, by the first access network device, the actual transmit power value based on the distance between the third access network device and the first access network device, the first access network device may further send second information. The second information includes the actual transmit power value and the second duration.

In another possible implementation, the first information further includes first uplink-downlink subframe configuration, and the uplink/downlink subframe is used to indicate a time period in which the second access network device sends a downlink signal through the first channel and a time period in which the second access network device receives an uplink signal through the first channel; and
the sending, by the first access network device, a signal based on the maximum transmit power value through the first channel includes:
determining, by the first access network device based on the first uplink-downlink subframe configuration, a first time period in which the first access network device sends a downlink signal through the first channel and a second time period in which the first access network device receives an uplink signal through the first channel;
sending, by the first access network device, the downlink signal based on the maximum transmit power value through the first channel in the first time period; and/or
sending, by the first access network device, second scheduling information to an access network device located in the signal coverage area of the first access network device, where the second scheduling information is used to instruct the access network device located in the signal coverage area of the first access network device to send an uplink signal to the first access network device through the first channel in the second time period.

In the foregoing process, when both the first access network device and the second access network device are base stations with relatively large transmit power, the first access network device and the second access network device may simultaneously send downlink signals and simultaneously receive uplink signals, so that sending an uplink signal by one access network device is not interfered by sending a downlink signal by another access network device.

In another possible implementation, after the determining, by the first access network device based on the first uplink-downlink subframe configuration, a first time period in which the first access network device sends a downlink signal through the first channel and a second time period in which the first access network device receives an uplink signal through the first channel, the first access network device may further determine second uplink-downlink subframe configuration based on the first time period in which the first access network device sends a downlink signal through the first channel and the second time period in which the first access network device receives an uplink signal through the first channel. Correspondingly, the second information may further include the second uplink-downlink subframe configuration.

In another possible implementation, correspondingly, that the first access network device determines a second power value includes:
determining, by the first access network device as the second power value, a power value for receiving the first information.

According to a third aspect, this application provides a signal transmission apparatus, including a first determining module and a sending module.

The first determining module is configured to determine that a first channel is idle.

The sending module is configured to send a first signal through the first channel in first duration.

The sending module is further configured to send first information that is used to indicate occupancy of the first channel. The first information includes a first power value and the first duration.

The first power value is power used by the second access network device to send the first signal through the first channel in the first duration.

In a possible implementation, the apparatus further includes a second determining module and a detection module.

The second determining module is configured to: before the first determining module determines that the first channel is idle, determine that there is a to-be-transmitted first signal.

The detection module is configured to perform detection on the first channel.

In another possible implementation, after the first duration ends, the sending module stops sending the first signal through the first channel.

In another possible implementation, the first information further includes uplink-downlink subframe configuration.

The uplink-downlink subframe configuration is used to indicate a time period in which the second access network device sends a downlink signal through the first channel and a time period in which the second access network device receives an uplink signal through the first channel.

In another possible implementation, the first determining module is specifically configured to:
obtain energy received on the first channel, and determine that the energy received on the first channel is less than a preset threshold; or
determine that information used to indicate occupancy of the first channel in the first preset duration is not received.

According to a fourth aspect, this application provides a signal transmission apparatus, including a receiving module and a first determining module.

The receiving module is configured to receive first information sent by a second access network device. The first information includes a first power value and first duration.

The first determining module is configured to determine a second power value. The second power value is a power value that is received by a first access network device in the first duration and that is used by the second access network device to transmit a signal through a first channel.

The first power value and the second power value are used by the first access network device to compute path loss information between the first access network device and the second access network device.

In another possible implementation, the apparatus further includes a second determining module and a third determining module.

The second determining module is configured to: after the first determining module determines the second power value, determine a preset maximum interference power value.

The third determining module is configured to determine a maximum transmit power value of the first access network device based on the path loss information and the preset maximum interference power value.

In another possible implementation, the apparatus further includes a judging module and a sending module.

The judging module is configured to: after the third determining module determines the maximum transmit power value of the first access network device based on the path loss information and the preset maximum interference power value, determine, based on the maximum transmit power value, whether the first channel needs to be occupied.

The sending module is configured to: when the judging module determines that the first channel needs to be occupied, send a signal based on the maximum transmit power value through the first channel in second duration.

In another possible implementation, the judging module is specifically configured to:
determine a signal coverage area of the first access network device based on the maximum transmit power value;
determine whether there is a third access network device in the signal coverage area, where there is a to-be-transmitted signal between the third access network device and the first access network device; and
if yes, determine that the first channel needs to be occupied.

In another possible implementation, the sending module is specifically configured to:
send the to-be-transmitted signal or first scheduling information to the third access network device by using an actual transmit power value that is less than or equal to the maximum transmit power value through the first channel in the second duration.

The first scheduling information is used to instruct the third access network device to send the to-be-transmitted signal to the first access network device through the first channel.

In another possible implementation, the sending module is specifically configured to:
obtain a distance between the third access network device and the first access network device;
determine the actual transmit power value based on the distance between the third access network device and the first access network device; and
when the to-be-transmitted signal is a signal that needs to be sent by the first access network device, send the to-be-transmitted signal to the third access network device by using the actual transmit power value through the first channel; or
when the first scheduling information is a signal that needs to be sent by the first access network device, send the first scheduling information to the third access network device by using the actual transmit power value through the first channel.

In another possible implementation, the sending module is further configured to send second information after the sending module determines the actual transmit power value based on the distance between the third access network device and the first access network device. The second information includes the actual transmit power value and the second duration.

In another possible implementation, the first information further includes first uplink-downlink subframe configuration, and the uplink/downlink subframe is used to indicate a time period in which the second access network device sends a downlink signal through the first channel and a time period in which the second access network device receives an uplink signal through the first channel.

The sending module is specifically configured to:
determine, based on the first uplink-downlink subframe configuration, a first time period in which the first access network device sends a downlink signal through the first channel and a second time period in which the first access network device receives an uplink signal through the first channel;
send the downlink signal based on the maximum transmit power value through the first channel in the first time period; and/or
send second scheduling information to an access network device located in the signal coverage area of the first access network device, where the second scheduling information is used to instruct the access network device located in the signal coverage area of the first access network device to send an uplink signal to the first access network device through the first channel in the second time period.

In another possible implementation, the apparatus further includes a fourth determining module.

The fourth determining module is configured to: after the sending module determines, based on the first uplink-downlink subframe configuration, the first time period in which the first access network device sends a downlink signal through the first channel and the second time period in which the first access network device receives an uplink signal through the first channel, determine second uplink-downlink subframe configuration based on the first time period in which the first access network device sends a downlink signal through the first channel and the second time period in which the first access network device receives an uplink signal through the first channel.

Correspondingly, the second information further includes the second uplink-downlink subframe configuration.

In another possible implementation, the first determining module is specifically configured to:
determine, as the second power value, a power value for receiving the first information.

According to a fifth aspect, this application provides an access network device, including a processor, a transmitter, a memory, and a communications bus. The memory stores a program instruction, the processor is configured to read and execute the program instruction in the memory, and the communications bus is configured to connect components.

The processor is configured to determine that a first channel is idle.

The transmitter is configured to send a first signal through the first channel in first duration.

The transmitter is further configured to send first information that is used to indicate occupancy of the first channel. The first information includes a first power value and the first duration.

The first power value is power used by the second access network device to send the first signal through the first channel in the first duration.

In a possible implementation, before the processor determines that the first channel is idle, the processor is further configured to:
determine that there is a to-be-transmitted first signal; and
perform detection on the first channel.

In another possible implementation, after the first duration ends, the transmitter stops sending the first signal through the first channel.

In another possible implementation, the first information further includes uplink-downlink subframe configuration.

The uplink-downlink subframe configuration is used to indicate a time period in which the second access network device sends a downlink signal through the first channel and a time period in which the second access network device receives an uplink signal through the first channel.

In another possible implementation, the processor is specifically configured to:
obtain, by the second access network device, energy received on the first channel, and determine that the energy received on the first channel is less than a preset threshold; or
determine, by the second access network device, that information used to indicate occupancy of the first channel in the first preset duration is not received.

According to a sixth aspect, this application provides an access network device, including a receiver, a processor, a memory, and a communications bus. The memory stores a program instruction, the processor is configured to read and execute the program instruction in the memory, and the communications bus is configured to connect components.

The receiver is configured to receive first information sent by a second access network device. The first information includes a first power value and first duration.

The processor is configured to determine a second power value. The second power value is a power value that is received by the first access network device in the first duration and that is used by the second access network device to transmit a signal through a first channel.

The first power value and the second power value are used by the first access network device to compute path loss information between the first access network device and the second access network device.

In a possible implementation, after the processor determines the second power value, the processor is further configured to:
determine a preset maximum interference power value; and
determine a maximum transmit power value of the first access network device based on the path loss information and the preset maximum interference power value.

In another possible implementation, the access network device further includes a transmitter.

The processor is configured to: after the processor determines the maximum transmit power value of the first access network device based on the path loss information and the preset maximum interference power value, determine, based on the maximum transmit power value, whether the first channel needs to be occupied.

The transmitter is configured to: when the processor determines that the first channel needs to be occupied, send a signal based on the maximum transmit power value through the first channel in second duration.

In another possible implementation, the processor is specifically configured to:
determine a signal coverage area of the first access network device based on the maximum transmit power value;
determine whether there is a third access network device in the signal coverage area, where there is a to-be-transmitted signal between the third access network device and the first access network device; and
if yes, determine that the first channel needs to be occupied.

In another possible implementation, the transmitter is specifically configured to:
send the to-be-transmitted signal or first scheduling information to the third access network device by using an actual transmit power value that is less than or equal to the maximum transmit power value through the first channel in the second duration.

The first scheduling information is used to instruct the third access network device to send the to-be-transmitted signal to the first access network device through the first channel.

In another possible implementation, the processor is further configured to: obtain a distance between the third access network device and the first access network device; determine the actual transmit power value based on the distance between the third access network device and the first access network device.

When the to-be-transmitted signal is a signal that needs to be sent by the first access network device, the transmitter sends the to-be-transmitted signal to the third access network device by using the actual transmit power value through the first channel.

When the first scheduling information is a signal that needs to be sent by the first access network device, the transmitter sends the first scheduling information to the third access network device by using the actual transmit power value through the first channel.

In another possible implementation, after the processor determines the actual transmit power value based on the distance between the third access network device and the first access network device, the transmitter is further configured to:
send second information, where the second information includes the actual transmit power value and the second duration.

In another possible implementation, the first information further includes first uplink-downlink subframe configuration, and the uplink/downlink subframe is used to indicate a time period in which the second access network device sends a downlink signal through the first channel and a time period in which the second access network device receives an uplink signal through the first channel.

Correspondingly, the processor is further configured to: determine, based on the first uplink-downlink subframe configuration, a first time period in which the first access network device sends a downlink signal through the first channel and a second time period in which the first access network device receives an uplink signal through the first channel.

The transmitter is specifically configured to: send the downlink signal based on the maximum transmit power value through the first channel in the first time period; and/or send second scheduling information to an access network device located in the signal coverage area of the first access network device. The second scheduling information is used to instruct the access network device located in the signal coverage area of the first access network device to send an uplink signal to the first access network device through the first channel in the second time period.

In another possible implementation, after the processor determines, based on the first uplink-downlink subframe configuration, the first time period in which the first access network device sends a downlink signal through the first channel and the second time period in which the first access network device receives an uplink signal through the first channel, the processor is further configured to:
determine second uplink-downlink subframe configuration based on the first time period in which the first access network device sends a downlink signal through the first channel and the second time period in which the first access network device receives an uplink signal through the first channel.

Correspondingly, the second information further includes the second uplink-downlink subframe configuration.

In another possible implementation, the processor is specifically configured to:
determine, by the first access network device as the second power value, a power value for receiving the first information.

According to a seventh aspect, this application further provides a signal transmission system, including the access network device described in any implementation of the fifth aspect and the access network device described in any implementation of the sixth aspect.

According to the unlicensed spectrum using method, apparatus, system, and the device provided in this application, when the second access network device detects that the first channel is idle and occupies the first channel, the second access network device sends the first information that is used to indicate occupancy of the first channel, and adds, to the first information, the first duration for which the second access network device needs to occupy the first channel and the first power value used to transmit a signal through the first channel. When the first access network device also needs to occupy the first channel, the first access network device may obtain the first power value from the received first information, obtain the received second power value that is used by the second access network device to transmit a signal through the first channel, determine the path loss information between the first access network device and the second access network device based on the first power value and the second power value, and determine the maximum transmit power value of the first access network device based on the path loss information and the preset maximum interference power value. When the first access network device sends a signal through the first channel by using the actual transmit power value that is less than or equal to the maximum transmit power value, interference caused by the first access network device to the second access network device is less than or equal to the preset maximum interference power value, thereby avoiding affecting normal communication of the second access network device. In the foregoing process, the first access network device may use an unlicensed spectrum to a greatest extent without affecting the second access network device, thereby improving spectrum efficiency of the unlicensed spectrum.

### DESCRIPTION OF DRAWINGS

FIG. 1 is a schematic diagram of an application scenario of a signal transmission method provided in this application;
FIG. 2 is a schematic flowchart of a signal transmission method according to this application;
FIG. 3A and FIG. 3B are a schematic flowchart 1 of a method for transmitting a signal through a first channel according to this application;
FIG. 4 is a schematic flowchart 2 of a method for transmitting a signal through a first channel according to this application;
FIG. 5 is a schematic structural diagram 1 of a signal transmission apparatus according to this application;
FIG. 6 is a schematic structural diagram 2 of a signal transmission apparatus according to this application;
FIG. 7 is a schematic structural diagram 1 of another signal transmission apparatus according to this application;
FIG. 8 is a schematic structural diagram 2 of another signal transmission apparatus according to this application;
FIG. 9 is a schematic structural diagram of an access network device according to this application;
FIG. 10 is a schematic structural diagram 1 of another access network device according to this application; and
FIG. 11 is a schematic structural diagram 2 of another access network device according to this application.

### DESCRIPTION OF EMBODIMENTS

To ensure fair use of spectrums, various countries formulate different laws and regulations, and a wireless device needs to follow local laws and regulations in different regions during use. A plurality of operators of various communications systems probably want to occupy a same spectrum. In some regions, when being used on an unlicensed spectrum, a wireless communications device needs to follow specific laws and regulations. For example, rules such as listen before talk (Listen Before Talk, LBT) and a channel bandwidth occupancy requirement during use of an unlicensed spectrum are stipulated in the ETSI EN 301 893 published by the European Telecommunications Standards Institute (European Telecommunications Standards Institute, ETSI). According to stipulations in the ETSI EN 301 893, the wireless communications device needs to use the LBT rule when occupying the unlicensed spectrum for communication, in other words, the device first monitors whether a channel is idle before using the channel, and if the channel is idle, the device may use the channel on the unlicensed spectrum. Specifically, the device may perform clear channel assessment (Clear Channel Assessment, CCA) through energy detection, to determine whether the monitored channel is idle.

In this application, an access network device may be a base station, an access point, or a device that communicates with a wireless terminal over an air interface in an access network by using one or more sectors. The access network device may be configured to convert a received over-the-air frame into an IP packet or convert a received IP packet into an over-the-air frame, and may serve as a router between the wireless terminal and a remaining part of the access network. The remaining part of the access network may include an Internet Protocol (IP) network. The access network device may further coordinate attribute management of an air interface. For example, the access network device may be a base transceiver station (Base Transceiver Station, BTS) in global system for mobile communications (Global System of Mobile communication, GSM) or code division multiple access (Code Division Multiple Access, CDMA), or a NodeB (NodeB, NB) in wideband code division multiple access (Wideband Code Division Multiple Access, WCDMA), or an evolved NodeB (Evolutional NodeB, eNB or eNodeB) in long term evolution (Long Term Evolution, LTE), or a relay node or an access point, or a base station in a future 5G network. No limitation is imposed herein.

In this application, a terminal device may be a wireless terminal or a wired terminal. The wireless terminal may be a device that provides a user with voice and/or other service data connectivity, a handheld device with a radio connection function, or another processing device connected to a radio modem. The wireless terminal may communicate with one or more core networks through a radio access network (Radio Access Network, RAN). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, the wireless terminal may be a device such as a personal communication service (Personal Communication Service, PCS) phone, a cordless telephone set, a session initiation protocol (Session Initiation Protocol, SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile terminal (Mobile), a remote station (Remote Station), a remote terminal (Remote Terminal), an access terminal (Access Terminal), a user terminal (User Terminal), a user agent (User Agent), user equipment (User Device or User Equipment). The present invention is not limited thereto.

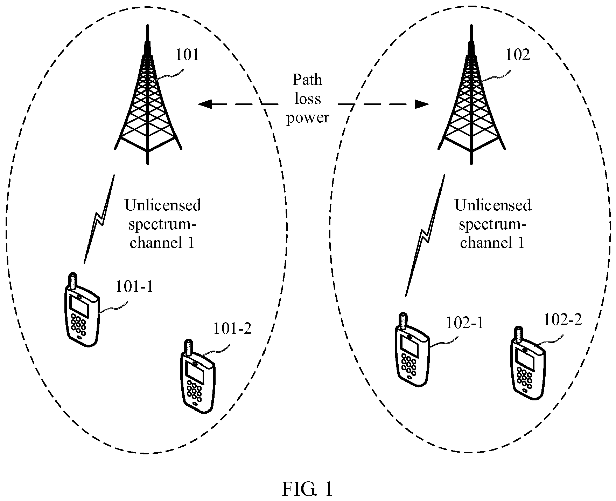

FIG. 1 is a schematic diagram of an application scenario of a signal transmission method provided in this application. Referring to FIG. 1, a base station 101, a terminal 101-1 and a terminal 101-2 in a signal coverage area of the base station 101, a base station 102, and a terminal 102-1 and a terminal 102-2 in a signal coverage area of the base station 102 are included. The base station 101 and the base station 102 may communicate with terminals in their respective signal coverage areas by using an unlicensed spectrum.

In an actual application process, after the base station 101 occupies a channel 1 in the unlicensed spectrum, the base station 101 broadcasts reservation information for use of the channel 1. For example, the reservation information may include a power value used by the base station 101 to transmit a signal on the channel 1 and a time period for using the channel 1 by the base station 101. When the base station 102 also needs to use the channel 1, the base station 102 may determine a maximum transmit power value of the base station 102 on the channel 1 based on the reservation information broadcast by the base station 101. Therefore, when transmitting a signal on the channel 1 based on power corresponding to the maximum transmit power value, the base station 102 does not cause excessive interference to the base station 101.

It should be noted that FIG. 1 is merely an example of the application scenario, and does not constitute a limitation on the application scenario in this application. In an actual application process, a specific application scenario may be set based on an actual requirement, and the application scenario of the solution is not specifically limited in this application.

In this application, after any second access network device (for example, a base station or a terminal) occupies a channel corresponding to an unlicensed spectrum, the second access network device sends (for example, broadcasts) reservation information, and adds, to the reservation information, duration for which the second access network device uses the channel, a power value used by the second access network device to transmit a signal on the channel, and the like. In this way, when a first access network device also needs to use the channel, the first access network device may determine a maximum transmit power value on the channel based on the reservation information. When transmitting a signal on the channel based on the maximum transmit power value, the first access network device does not cause excessive interference to the second access network device. Therefore, an access network device can properly use an unlicensed spectrum, thereby improving spectrum efficiency of the unlicensed spectrum.

Specific examples are used below to describe in detail the technical solutions shown in this application. It should be noted that, the following specific embodiments may be combined with each other, and same or similar content is not repeatedly described in different embodiments.

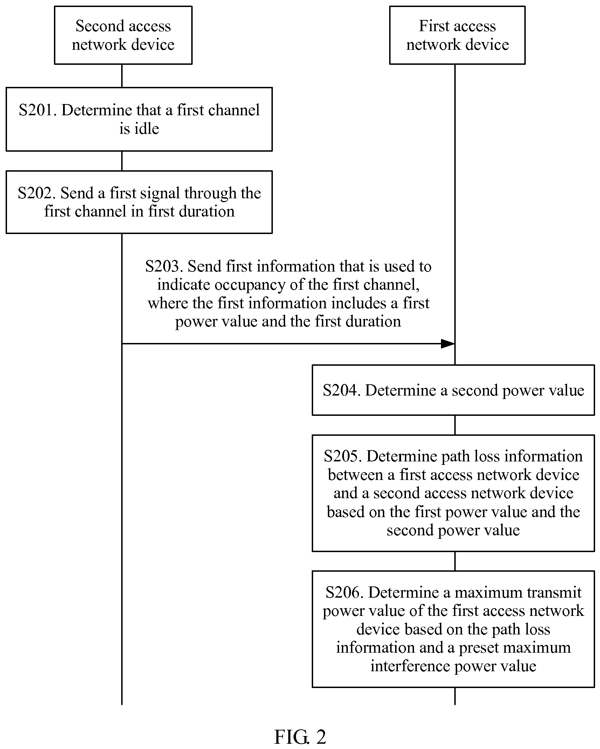

FIG. 2 is a schematic flowchart of a signal transmission method according to this application. Referring to FIG. 2, the method may include the following steps.

S201. A second access network device determines that a first channel is idle.

In an actual application process, before S201, the second access network device determines, in real time, whether there is a to-be-transmitted signal between the second access network device and another device. The to-be-transmitted signal may be a signal that needs to be sent by the second access network device to the another device, or may be a signal that needs to be sent by the another device to the second access network device. When the second access network device determines that there is a to-be-transmitted signal, the second access network device performs detection on the first channel, to determine whether the first channel is idle. The first channel is any channel in an unlicensed spectrum. The another device may be an access network device or a terminal device, and this is not specifically limited herein.

Optionally, the second access network device may determine, in the following at least two feasible implementations, whether the first channel is idle.

One feasible implementation is as follows:
The second access network device determines, in an LBT manner, whether the first channel is idle. Optionally, the second access network device may obtain energy received on the first channel, and determine whether the energy received on the first channel is less than a preset threshold. If yes, it is determined that the first channel is idle; otherwise, it is determined that the first channel is not idle. In an actual application process, the preset threshold may be set based on an actual requirement.

The other feasible implementation is as follows:
The second access network device determines whether information used to indicate occupancy of the first channel in first preset duration is received. If yes, the second access network device determines that the first channel is idle; otherwise, the second access network device determines that the first channel is not idle.

S202. The second access network device sends a first signal through a first channel in first duration.

Optionally, the first signal is a data signal, a control signal, or the like.

S203. The second access network device sends first information that is used to indicate occupancy of the first channel, where the first information includes a first power value and the first duration.

The first power value is power used by the second access network device to send the first signal through the first channel in the first duration.

After the second access network device determines that the first channel is idle, the second access network device determines the first duration required for occupying the first channel. For example, the first duration may be 10 milliseconds, 8 milliseconds, or the like. The first duration may be set based on an actual requirement. The second access network device further determines the first power value that is used to send the first signal through the first channel in the first duration.

Optionally, the second access network device may broadcast the first information, or may send the first information to another access network device or a terminal device in a preset adjacent area of the second access network device. The second access network device may send the first information through the first channel, or may send the first information through another channel. When the second access network device sends the first information through the first channel, the second access network device sends the first information by using power corresponding to the first power value.

In an actual application process, after the second access network device sends the first information, the second access network device may send a signal by using the power corresponding to the first power value through the first channel in the first duration. After the first duration ends, the second access network device stops sending a signal through the first channel.

Optionally, the first information may further include uplink-downlink subframe configuration, and the uplink-downlink subframe configuration is used to indicate a time period in which the second access network device sends a downlink signal through the first channel and a time period in which the second access network device receives an uplink signal through the first channel. In this way, when another access network device also sends a signal through the first channel in the first duration, a time period in which the another access network device sends a downlink signal and a time period in which the another access network device receives an uplink signal may be determined with reference to the uplink-downlink subframe configuration, so as to avoid uplink and downlink interference when the another access network device and the second access network device simultaneously use the first channel. In this application, a signal sent by the second access network device is referred to as a downlink signal, and a signal received by the second access network device is referred to as an uplink signal.

Certainly, the first information may further include other parameters, for example, an identifier of the first channel and an identifier of a second access network. In an actual application process, content included in the first information may be determined based on an actual requirement, and this is not specifically limited in this application.

It should be noted that an execution sequence of S202 and S203 may not be limited in this embodiment of the present invention. In an actual application process, the second access network device may send the first information and the first signal at any locations on the first channel. The locations at which the first information and the first signal are sent are not specifically limited in this embodiment of the present invention. Optionally, S203 is performed before step S202. The second access network device first sends the first signal to instruct to transmit a signal by using the first power value in the first duration to occupy the first channel, and then sends the first signal through the first channel. In this way, advance notification may be performed before a signal is transmitted, so that another device (an access network device or a terminal device) may predetermine whether to occupy the first channel in the first duration, thereby further improving channel transmission efficiency.

S204. A first access network device determines a second power value, where the second power value is a power value that is received by the first access network device in the first duration and that is used by the second access network device to transmit a signal through the first channel.

The first power value and the second power value are used by the first access network device to compute path loss information between the first access network device and the second access network device.

It is assumed that the distance between the first access network device and the second access network device is relatively small, and the first access network device can receive the first information sent by the second access network device.

When the first access network device also needs to use the first channel in the first duration, the first access network device obtains the second power value that is received in the first duration and that is used by the second access network device to transmit a signal through the first channel. Because a path power loss exists in a signal transmission process, the second power value is less than the first power value.

Optionally, when the first information is sent by the second access network device through the first channel, correspondingly, the first access network device may obtain a power value of the received first information, and determine the power value of the received first information as the second power value.

S205. The first access network device determines path loss information between the first access network device and the second access network device based on the first power value and the second power value.

Optionally, the path loss information may be a path loss power value between the first access network device and the second access network device. The path loss power value is a power loss value generated when a signal is transmitted between the first access network device and the first access network device. Optionally, a difference between the first power value and the second power value may be determined as the path loss power value between the first access network device and the second access network device.

S206. The first access network device determines a maximum transmit power value of the first access network device based on the path loss information and a preset maximum interference power value.

The preset maximum interference power value is maximum power that does not affect normal communication of an access network device. In an actual application process, the preset maximum interference power value may be set based on an actual requirement.

Optionally, when there are a plurality of second access network devices, the first access network device may obtain path loss information between the first access network device and each second access network device in S204. Correspondingly, in S205, to ensure that the first access network device does not affect normal communication of any second access network device, the first access network device needs to determine the maximum transmit power value based on each piece of path loss information.

Optionally, when the path loss information is the path loss power value, a sum of the path loss power value and the preset maximum interference power value may be determined as the maximum transmit power value. After the maximum transmit power value is determined, a signal may be sent through the first channel based on the maximum transmit power value. For example, a signal may be sent through the first channel by using an actual transmit power value that is less than or equal to the maximum transmit power value.

According to the unlicensed spectrum using method provided in this application, when the second access network device detects that the first channel is idle and occupies the first channel, the second access network device sends the first information that is used to indicate occupancy of the first channel, and adds, to the first information, the first duration for which the second access network device needs to occupy the first channel and the first power value used to transmit a signal through the first channel. When the first access network device also needs to occupy the first channel, the first access network device may obtain the first power value from the received first information, obtain the received second power value that is used by the second access network device to transmit a signal through the first channel, determine the path loss information between the first access network device and the second access network device based on the first power value and the second power value, and determine the maximum transmit power value of the first access network device based on the path loss information and the preset maximum interference power value. When the first access network device sends a signal through the first channel by using the actual transmit power value that is less than or equal to the maximum transmit power value, interference caused by the first access network device to the second access network device is less than or equal to the preset maximum interference power value, thereby avoiding affecting normal communication of the second access network device. In the foregoing process, the first access network device may use an unlicensed spectrum to a greatest extent without affecting the second access network device, thereby improving spectrum efficiency of the unlicensed spectrum.

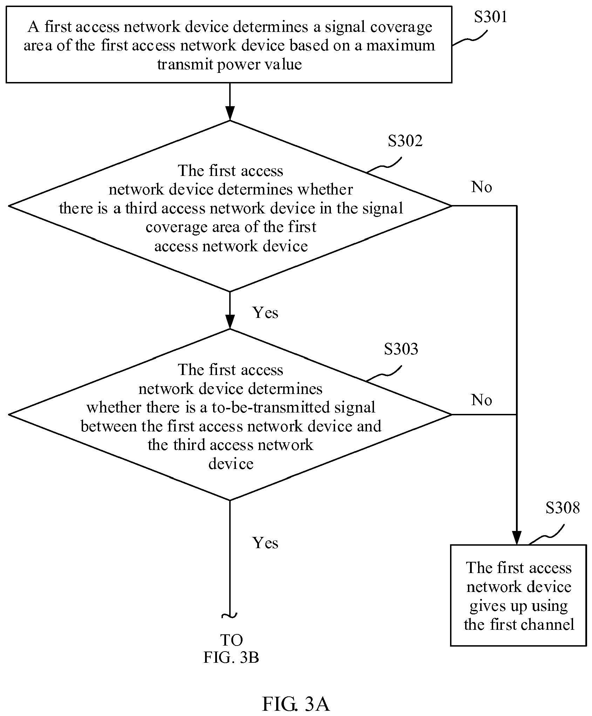

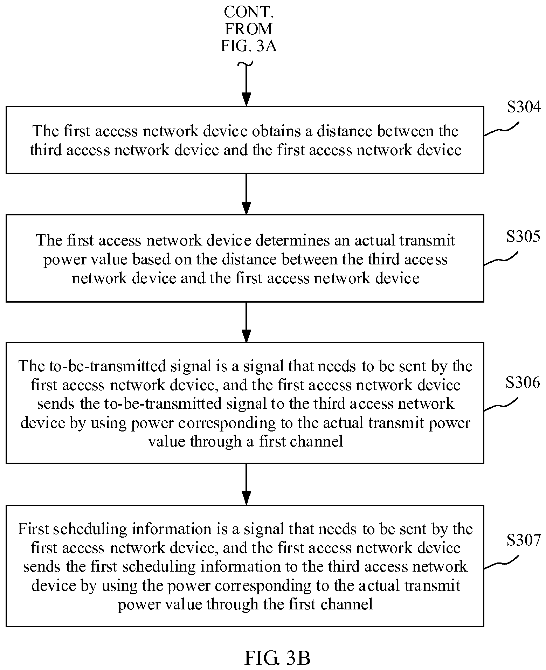

Based on the embodiment shown in FIG. 2, optionally, after the first access network device determines the maximum transmit power value, the first access network device may transmit a signal through the first channel in the following feasible implementation. For details, refer to an embodiment shown in FIG. 3A and FIG. 3B.

FIG. 3A and FIG. 3B are a schematic flowchart 1 of a method for transmitting a signal through a first channel according to this application. Referring to FIG. 3A and FIG. 3B, the method may include the following steps.

S301. A first access network device determines a signal coverage area of the first access network device based on a maximum transmit power value.

The signal coverage area of the first access network device is an available range of a signal when the signal is transmitted by the first access network device by using power corresponding to the maximum transmit power value. There is a correspondence between the maximum transmit power value and the signal coverage area of the first access network device. A larger maximum transmit power value indicates a larger signal coverage area of the first access network device.

S302. The first access network device determines whether there is a third access network device in the signal coverage area of the first access network device.

If yes, S303 is performed.

If no, S308 is performed.

Optionally, the first access network device may broadcast a discovery message by using the power corresponding to the maximum transmit power value. An access network device that receives the discovery message feeds back a response message to the first access network device. If the first access network device receives the response message corresponding to the discovery message, it indicates that there is a third access network device in the signal coverage area of the first access network device; otherwise, it indicates that there is no third access network device in the signal coverage area of the first access network device.

S303. The first access network device determines whether there is a to-be-transmitted signal between the first access network device and the third access network device.

If yes, S304 is performed.

If no, S308 is performed.

Optionally, the to-be-transmitted signal may be a signal that needs to be sent by the first access network device to the third access network device, or may be a signal that needs to be sent by the third access network device to the first access network device.

Optionally, when the to-be-transmitted signal is a signal that needs to be sent by the third access network device to the first access network device, the first access network device may determine whether the third access network device is sending a signal through another channel, and if yes, the first access network device may determine that the third access network device has a signal that needs to be sent to the first access network device.

S304. The first access network device obtains a distance between the third access network device and the first access network device.

Optionally, the first access network device may obtain location information of the first access network device and location information of the third access network device, and obtain the distance between the third access network device and the first access network device based on the location information of the first access network device and the location information of the third access network device.

S305. The first access network device determines an actual transmit power value based on the distance between the third access network device and the first access network device.

There is a correspondence between the actual transmit power value and the distance between the third access network device and the first access network device. A larger distance between the third access network device and the first access network device indicates a larger actual transmit power value.

Optionally, when there are a plurality of third access network devices, the first access network device obtains a distance between the first access network device and each third access network device, and determines the actual transmit power value based on a maximum distance.

The maximum transmit power value corresponds to the signal coverage area of the first access network device, and the actual transmit power value corresponds to the distance between the third access network device and the first access network device. Because the third access network device is located in the signal coverage area of the first access network device, the actual transmit power value is less than or equal to the maximum transmit power value.

Optionally, after the first access network device determines the actual transmit power value, the first access network device may determine second duration for using the first channel (the second duration and the first duration overlap), send second information, and add the second duration and the actual transmit power value to the second information.

S306. The to-be-transmitted signal is a signal that needs to be sent by the first access network device, and the first access network device sends the to-be-transmitted signal to the third access network device by using power corresponding to the actual transmit power value through the first channel.

S307. First scheduling information is a signal that needs to be sent by the first access network device, and the first access network device sends the first scheduling information to the third access network device by using the power corresponding to the actual transmit power value through the first channel, where the first scheduling information is used to instruct the third access network device to send the to-be-transmitted signal to the first access network device through the first channel.

Because the first channel is preempted by the first access network device, when the third access network device needs to send a signal to the first access network device through the first channel, the first access network device needs to send the first scheduling information to the third access network device, and add an identifier of the first channel to the first scheduling information, to instruct the third access network device to send the signal to the first access network device through the first channel.

S308. The first access network device gives up using the first channel.

When the first access network device determines that there is no third access network device in the signal coverage area of the first access network device, or there is no to-be-transmitted signal between the first access network device and the third access network device in the coverage area of the first access network device, the first access network device gives up using the first channel.

In the embodiment shown in FIG. 3A and FIG. 3B, after the first access network device determines the maximum transmit power value, the first access network device determines, based on an actual status of an access network device in a signal coverage area corresponding to the maximum transmit power value (for example, whether there is a third access network device in the signal coverage area or whether there is a to-be-transmitted signal between the first access network device and the third access network device in the signal coverage area), whether to use the first channel. When the first access network device determines to use the first channel, the first access network device may determine the actual transmit power value based on the distance between the first access network device and the third access network device. When sending a signal to the third access network device by using the actual transmit power value, the first access network device may ensure that the third access network device can successfully receive the signal sent by the first access network device, and can further ensure that the first access network device cause minimal interference to a second access network device, thereby further improving spectrum efficiency of an unlicensed spectrum.

In the prior art, it is assumed that the first access network device and the second access network device simultaneously use the first channel. It is further assumed that the first access network device is a first base station, the second access network device is a second base station, the third access network device is a first terminal, and a third access network device in a signal coverage area of the second access network device is a second terminal. In an actual application process, when the first base station sends a signal to the first terminal through the first channel, the second terminal also sends a signal to the second base station through the first channel. Because transmit power of the first base station is relatively large (usually greater than transmit power of the second terminal), when the first base station sends a downlink signal, great interference is caused to sending an uplink signal by the second terminal.

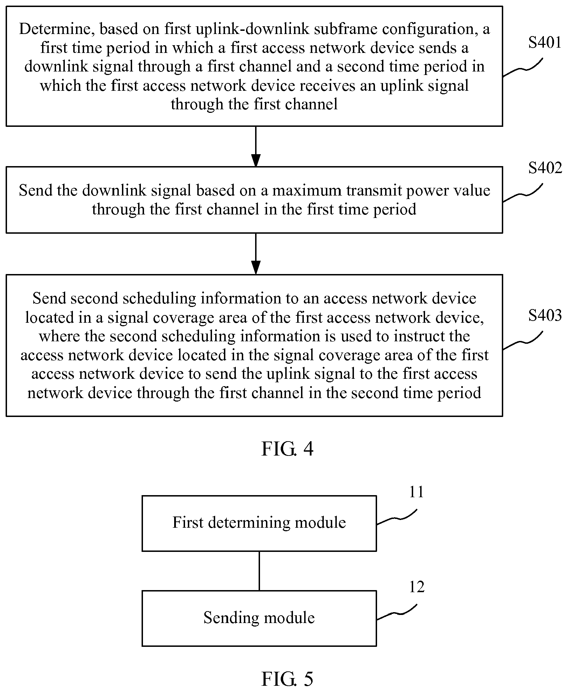

In this application, to resolve the foregoing technical problem, when the second access network device sends first information, uplink-downlink subframe configuration may be further added to the first information. First uplink-downlink subframe configuration is used to indicate a time period in which the second access network device sends a downlink signal through the first channel and a time period in which the second access network device receives an uplink signal through the first channel. Correspondingly, the first access network device may send a signal through the first channel based on maximum transmit power in the following feasible implementation. For details, refer to an embodiment shown in FIG. 4.

FIG. 4 is a schematic flowchart 2 of a method for transmitting a signal through a first channel according to this application. Referring to FIG. 4, the method may include the following steps.

S401. Determine, based on first uplink-downlink subframe configuration, a first time period in which a first access network device sends a downlink signal through a first channel and a second time period in which the first access network device receives an uplink signal through the first channel.

The first uplink-downlink subframe configuration includes a time period in which a second access network device sends a downlink signal through the first channel and a time period in which the second access network device receives an uplink signal through the first channel. Therefore, the first access network device may determine, based on the first uplink-downlink subframe configuration, the first time period in which the first access network device sends a downlink signal through the first channel and the second time period in which the first access network device receives an uplink signal through the first channel. The first time period corresponds to the time period in which the second access network device sends a downlink signal through the first channel, and the second time period corresponds to the time period in which the second access network device receives an uplink signal through the first channel. For example, when both the first access network device and the second access network device are base stations with relatively large transmit power, the first time period is the same as the time period in which the second access network device sends a downlink signal through the first channel, and the second time period is the same as the time period in which the second access network device receives an uplink signal through the first channel. When one of the first access network device and the second access network device is a base station with relatively large transmit power, and the other one is a user terminal with relatively small transmit power, the first time period is the same as the time period in which the second access network device receives an uplink signal through the first channel, and the second time period is the same as the time period in which the second access network device sends a downlink signal through the first channel.

S402. Send the downlink signal based on a maximum transmit power value through the first channel in the first time period.

Optionally, the first access network device may send the downlink signal through the first channel in the first time period by using the method shown in the embodiment in FIG. 3A and FIG. 3B. Details are not described herein again.

S403. Send second scheduling information to an access network device located in a signal coverage area of the first access network device, where the second scheduling information is used to instruct the access network device located in the signal coverage area of the first access network device to send the uplink signal to the first access network device through the first channel in the second time period.

Optionally, for a process of performing S403, refer to S307. Details are not described herein again.

In the embodiment shown in FIG. 4, when sending first information, the second access network device adds the uplink-downlink subframe configuration to the first information. In this way, the first access network device may determine, based on the uplink-downlink subframe configuration in the first information, the first time period in which the first access network device sends a downlink signal through the first channel and the second time period in which the access network device in the signal coverage area of the first access network device is scheduled to send an uplink signal through the first channel. When both the first access network device and the second access network device are base stations with relatively large transmit power, the first access network device and the second access network device may simultaneously send downlink signals and simultaneously receive uplink signals, so that sending an uplink signal by one access network device is not interfered by sending a downlink signal by another access network device.

Based on the embodiment shown in FIG. 4, after the first access network device determines, based on the first uplink-downlink subframe configuration, the first time period in which the first access network device sends a downlink signal through the first channel and the second time period in which the first access network device receives an uplink signal through the first channel, the first access network device may further determine second uplink-downlink subframe configuration based on the first time period in which the first access network device sends a downlink signal through the first channel and the second time period in which the first access network device receives an uplink signal through the first channel, and add the second uplink-downlink subframe configuration to the second information.

The following describes technical solutions of the method embodiment in detail with reference to a specific example.

For example, when a base station 2 needs to send a signal, the base station 2 detects whether a channel 1 on an unlicensed spectrum is idle. When the base station 2 detects that the channel 1 is idle, the base station 2 occupies the channel 1, and broadcasts reservation information 1. The reservation information 1 includes a time period 1 in which the base station 2 occupies the channel 1, power 1 used by the base station 2 to transmit a signal on the channel 1, and uplink-downlink subframe configuration 1 used by the base station 2 to transmit a signal on the channel 1. Specifically, the reservation information 1 may be shown in Table 1.

**Table 1**

| Reservation information 1 | |
|---|---|
| Time period | From the 10^{th} millisecond to the 20^{th} millisecond |
| Power value | Power 1 |
| Uplink-downlink subframe configuration | Uplink in the 10^{th} millisecond, downlink in the 11^{th} millisecond, uplink in the 12^{th} millisecond, and the like |

In the 12^{th} millisecond, when a base station 1 needs to use the channel 1, the base station 1 obtains the reservation information 1 shown in Table 1. The base station 1 further obtains power 2 for receiving the reservation information 1. The base station 1 determines, based on the power 1 and the power 2, that a path loss power value between the base station 1 and the base station 2 is "power 1 - power 2". The base station 1 further obtains a preset maximum interference power value (power 3). The base station 1 determines, based on the path loss power value (power 1 - power 2) and the preset maximum interference power value (power 3), that maximum transmit power of the base station 1 is "power 1 - power 2 + power 3" (referred to as power 4).

After the base station 1 determines the maximum transmit power (power 4), the base station 1 determines a signal coverage area 1 of the base station 1 based on the power 4. The base station 1 determines that there is a user terminal 1 in the signal coverage area 1 and that the base station 1 needs to send a signal to the user terminal 1. The base station 1 determines an actual transmit power (power 5) based on a distance between the base station 1 and the user terminal 1.

The base station 1 determines that a time period required for occupying the channel 1 is from the 12^{th} millisecond to the 22^{nd} millisecond. To ensure that the base station 1 and the base station 2 simultaneously send uplink/downlink signals, the base station 1 further determines uplink-downlink subframe configuration 2, and broadcasts reservation information 2. The reservation information 2 may be shown in Table 2.

**Table 2**

| Reservation information 2 | |
|---|---|
| Time period | From the 12^{th} millisecond to the 22^{nd} millisecond |
| Power | Power 5 |
| Uplink-downlink subframe configuration | Uplink in the 12^{th} millisecond, downlink in the 13^{th} millisecond, uplink in the 14^{th} millisecond, and the like |

After the base station 1 broadcasts the reservation information 2, from the 12^{th} millisecond to the 22^{nd} millisecond, the base station 1 sends a signal to the user terminal 1 by using the power 5 on the channel 1 in a downlink time period corresponding to the uplink-downlink subframe configuration, and the base station 1 receives, on the channel 1 in an uplink time period corresponding to the uplink-downlink subframe configuration, a signal sent by the user terminal 1.

In the foregoing process, when the base station 1 needs to use the channel 1, the base station 1 may determine an actual transmit power value based on the reservation information 1 broadcast by the base station 2, so that when the base station 1 transmits a signal on the channel 1 based on the actual transmit power, normal communication of the base station 2 is not affected, thereby improving spectrum efficiency of the channel 1.

It should be noted that in actual application process, a terminal device may perform the technical solutions shown in the embodiments in FIG. 2 to FIG. 4. Implementation principles and beneficial effects of the terminal device are similar to those in the foregoing embodiments, and details are not described herein.

FIG. 5 is a schematic structural diagram 1 of a signal transmission apparatus according to this application. Referring to FIG. 5, the apparatus may include a first determining module 11 and a sending module 12.

The first determining module 11 is configured to determine that a first channel is idle.

The sending module 12 is configured to send a first signal through the first channel in first duration.

The sending module 12 is further configured to send first information that is used to indicate occupancy of the first channel. The first information includes a first power value and the first duration.

The first power value is power used by the second access network device to send the first signal through the first channel in the first duration.

The signal transmission apparatus provided in this application may execute the technical solution shown in the foregoing method embodiment. An implementation principle and a beneficial effect of the signal transmission apparatus are similar to those of the foregoing method embodiment, and details are not described herein.

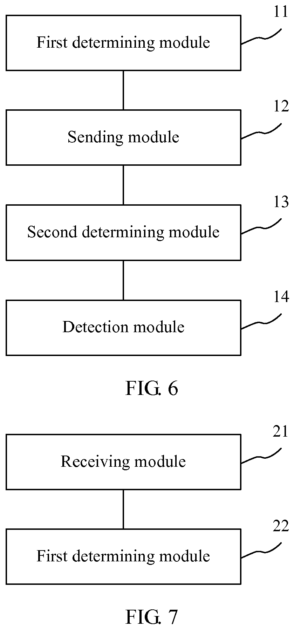

FIG. 6 is a schematic structural diagram 2 of a signal transmission apparatus according to this application. Based on the embodiment shown in FIG. 5, referring to FIG. 6, the apparatus further includes a second determining module 13 and a detection module 14.

The second determining module 13 is configured to: before the first determining module 11 determines that the first channel is idle, determine that there is a to-be-transmitted first signal.

The detection module 14 is configured to perform detection on the first channel.

In a possible implementation, after the first duration ends, the sending module 12 stops sending the first signal through the first channel.

In another possible implementation, the first information further includes uplink-downlink subframe configuration.

The uplink-downlink subframe configuration is used to indicate a time period in which the second access network device sends a downlink signal through the first channel and a time period in which the second access network device receives an uplink signal through the first channel.

In another possible implementation, the first determining module 11 is specifically configured to:
obtain energy received on the first channel, and determine that the energy received on the first channel is less than a preset threshold; or
determine that information used to indicate occupancy of the first channel in the first preset duration is not received.

The signal transmission apparatus provided in this application may execute the technical solution shown in the foregoing method embodiment. An implementation principle and a beneficial effect of the signal transmission apparatus are similar to those of the foregoing method embodiment, and details are not described herein.

FIG. 7 is a schematic structural diagram 1 of another signal transmission apparatus according to this application. Referring to FIG. 7, the apparatus may include a receiving module 21 and a first determining module 22.

The receiving module 21 is configured to receive first information sent by a second access network device. The first information includes a first power value and first duration.

The first determining module 22 is configured to determine a second power value. The second power value is a power value that is received by a first access network device in the first duration and that is used by the second access network device to transmit a signal through a first channel.

The first power value and the second power value are used by the first access network device to compute path loss information between the first access network device and the second access network device.

The signal transmission apparatus provided in this application may execute the technical solution shown in the foregoing method embodiment. An implementation principle and a beneficial effect of the signal transmission apparatus are similar to those of the foregoing method embodiment, and details are not described herein.

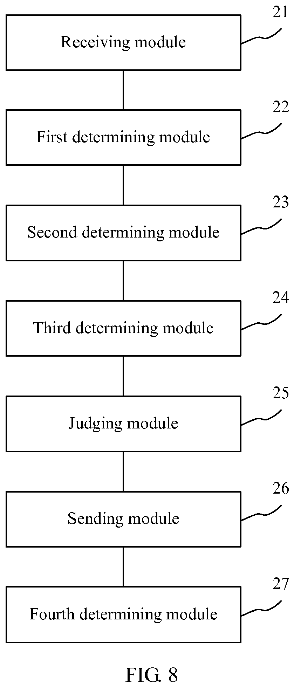

FIG. 8 is a schematic structural diagram 2 of another signal transmission apparatus according to this application. Based on the embodiment shown in FIG. 7, referring to FIG. 8, the apparatus further includes a second determining module 23 and a third determining module 24.

The second determining module 23 is configured to: after the first determining module 22 determines the second power value, determine a preset maximum interference power value.

The third determining module 24 is configured to determine a maximum transmit power value of the first access network device based on the path loss information and the preset maximum interference power value.

In another possible implementation, the apparatus further includes a judging module 25 and a sending module 26.

The judging module 25 is configured to: after the third determining module 24 determines the maximum transmit power value of the first access network device based on the path loss information and the preset maximum interference power value, determine, based on the maximum transmit power value, whether the first channel needs to be occupied.

The sending module 26 is configured to: when the judging module 25 determines that the first channel needs to be occupied, send a signal based on the maximum transmit power value through the first channel in second duration.

In another possible implementation, the judging module 25 is specifically configured to:
determine a signal coverage area of the first access network device based on the maximum transmit power value;
determine whether there is a third access network device in the signal coverage area, where there is a to-be-transmitted signal between the third access network device and the first access network device; and
if yes, determine that the first channel needs to be occupied.

In another possible implementation, the sending module 26 is specifically configured to:
send the to-be-transmitted signal or first scheduling information to the third access network device by using an actual transmit power value that is less than or equal to the maximum transmit power value through the first channel in the second duration.

The first scheduling information is used to instruct the third access network device to send the to-be-transmitted signal to the first access network device through the first channel.

In another possible implementation, the sending module 26 is specifically configured to:
obtain a distance between the third access network device and the first access network device;
determine the actual transmit power value based on the distance between the third access network device and the first access network device; and
when the to-be-transmitted signal is a signal that needs to be sent by the first access network device, send the to-be-transmitted signal to the third access network device by using the actual transmit power value through the first channel; or
when the first scheduling information is a signal that needs to be sent by the first access network device, send the first scheduling information to the third access network device by using the actual transmit power value through the first channel.

In another possible implementation, the sending module 26 is further configured to send second information after the sending module 26 determines the actual transmit power value based on the distance between the third access network device and the first access network device. The second information includes the actual transmit power value and the second duration.

In another possible implementation, the first information further includes first uplink-downlink sub frame configuration, and the uplink/downlink sub frame is used to indicate a time period in which the second access network device sends a downlink signal through the first channel and a time period in which the second access network device receives an uplink signal through the first channel.

The sending module 26 is specifically configured to:
determine, based on the first uplink-downlink subframe configuration, a first time period in which the first access network device sends a downlink signal through the first channel and a second time period in which the first access network device receives an uplink signal through the first channel;
send the downlink signal based on the maximum transmit power value through the first channel in the first time period; and/or
send second scheduling information to an access network device located in the signal coverage area of the first access network device, where the second scheduling information is used to instruct the access network device located in the signal coverage area of the first access network device to send an uplink signal to the first access network device through the first channel in the second time period.

In another possible implementation, the apparatus further includes a fourth determining module 27.

The fourth determining module 27 is configured to: after the sending module 26 determines, based on the first uplink-downlink subframe configuration, the first time period in which the first access network device sends a downlink signal through the first channel and the second time period in which the first access network device receives an uplink signal through the first channel, determine second uplink-downlink subframe configuration based on the first time period in which the first access network device sends a downlink signal through the first channel and the second time period in which the first access network device receives an uplink signal through the first channel.

Correspondingly, the second information further includes the second uplink-downlink subframe configuration.

In another possible implementation, the first determining module 22 is specifically configured to:
determine, as the second power value, a power value for receiving the first information.

The signal transmission apparatus provided in this application may execute the technical solution shown in the foregoing method embodiment. An implementation principle and a beneficial effect of the signal transmission apparatus are similar to those of the foregoing method embodiment, and details are not described herein.

It should be noted that the signal transmission apparatus shown in any one of the embodiments in FIG. 5 to FIG. 8 may be disposed in an access network device, or may be disposed in a terminal device, and this is not specifically limited in this embodiment of the present invention.

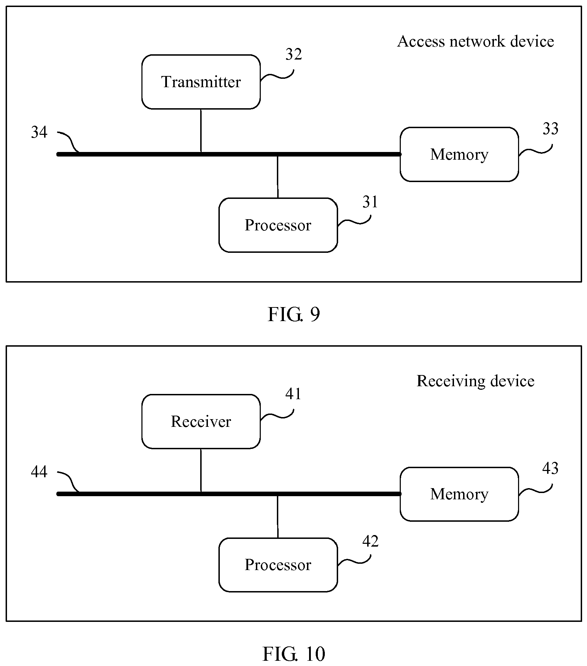

FIG. 9 is a schematic structural diagram of an access network device according to this application. Referring to FIG. 9, the access network device may include a processor 31, a transmitter 32, a memory 33, and a communications bus 34. The memory 33 stores a program instruction, the processor 31 is configured to read and execute the program instruction in the memory 33, and the communications bus 34 is configured to connect components.

The processor 31 is configured to determine that a first channel is idle.

The transmitter 32 is configured to send a first signal through the first channel in first duration.

The transmitter 32 is further configured to send first information that is used to indicate occupancy of the first channel. The first information includes a first power value and the first duration.

The first power value is power used by the second access network device to send the first signal through the first channel in the first duration.

The access network device provided in this application may execute the technical solution shown in the foregoing method embodiment. An implementation principle and a beneficial effect of the access network device are similar to those of the foregoing method embodiment, and details are not described herein.

In a possible implementation, before the processor 31 determines that the first channel is idle, the processor is further configured to:
determine that there is a to-be-transmitted first signal; and
perform detection on the first channel.

In another possible implementation, after the first duration ends, the transmitter 32 stops sending the first signal through the first channel.

In another possible implementation, the first information further includes uplink-downlink subframe configuration.

The uplink-downlink subframe configuration is used to indicate a time period in which the second access network device sends a downlink signal through the first channel and a time period in which the second access network device receives an uplink signal through the first channel.

In another possible implementation, the processor 31 is specifically configured to:
obtain, by the second access network device, energy received on the first channel, and determine that the energy received on the first channel is less than a preset threshold; or
determine, by the second access network device, that information used to indicate occupancy of the first channel in the first preset duration is not received.

The access network device provided in this application may execute the technical solution shown in the foregoing method embodiment. An implementation principle and a beneficial effect of the access network device are similar to those of the foregoing method embodiment, and details are not described herein.

FIG. 10 is a schematic structural diagram 1 of another access network device according to this application. Referring to FIG. 10, the access network device may include a receiver 41, a processor 42, a memory 43, and a communications bus 44. The memory 43 stores a program instruction, the processor 41 is configured to read and execute the program instruction in the memory 43, and the communications bus 44 is configured to connect components.

The receiver 41 is configured to receive first information sent by a second access network device. The first information includes a first power value and first duration.

The processor 42 is configured to determine a second power value. The second power value is a power value that is received by the first access network device in the first duration and that is used by the second access network device to transmit a signal through a first channel.

The first power value and the second power value are used by the first access network device to compute path loss information between the first access network device and the second access network device.

The access network device provided in this application may execute the technical solution shown in the foregoing method embodiment. An implementation principle and a beneficial effect of the access network device are similar to those of the foregoing method embodiment, and details are not described herein.

In another possible implementation, after the processor 42 determines the second power value, the processor 42 is further configured to:
determine a preset maximum interference power value; and
determine a maximum transmit power value of the first access network device based on the path loss information and the preset maximum interference power value.

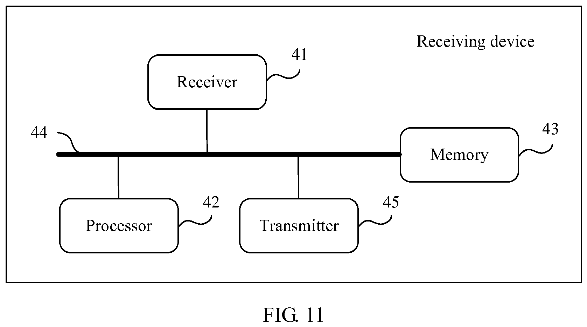

FIG. 11 is a schematic structural diagram 2 of another access network device according to this application. Based on the embodiment shown in FIG. 10, referring to FIG. 11, the access network device further includes a transmitter 45.

The processor 42 is configured to: after the processor 42 determines the maximum transmit power value of the first access network device based on the path loss information and the preset maximum interference power value, determine, based on the maximum transmit power value, whether the first channel needs to be occupied.

The transmitter 45 is configured to: when the processor 42 determines that the first channel needs to be occupied, send a signal based on the maximum transmit power value through the first channel in second duration.

In another possible implementation, the processor 42 is specifically configured to:
determine a signal coverage area of the first access network device based on the maximum transmit power value;
determine whether there is a third access network device in the signal coverage area, where there is a to-be-transmitted signal between the third access network device and the first access network device; and
if yes, determine that the first channel needs to be occupied.

In another possible implementation, the transmitter 45 is specifically configured to:
send the to-be-transmitted signal or first scheduling information to the third access network device by using an actual transmit power value that is less than or equal to the maximum transmit power value through the first channel in the second duration.

The first scheduling information is used to instruct the third access network device to send the to-be-transmitted signal to the first access network device through the first channel.

In another possible implementation, the processor 42 is further configured to: obtain a distance between the third access network device and the first access network device; determine the actual transmit power value based on the distance between the third access network device and the first access network device.

When the to-be-transmitted signal is a signal that needs to be sent by the first access network device, the transmitter 45 sends the to-be-transmitted signal to the third access network device by using the actual transmit power value through the first channel; or
when the first scheduling information is a signal that needs to be sent by the first access network device, the transmitter 45 sends the first scheduling information to the third access network device by using the actual transmit power value through the first channel.

In another possible implementation, after the processor determines the actual transmit power value based on the distance between the third access network device and the first access network device, the transmitter is further configured to:
send second information, where the second information includes the actual transmit power value and the second duration.

In another possible implementation, the first information further includes first uplink-downlink sub frame configuration, and the uplink/downlink sub frame is used to indicate a time period in which the second access network device sends a downlink signal through the first channel and a time period in which the second access network device receives an uplink signal through the first channel.

The processor 42 is further configured to: determine, based on the first uplink-downlink subframe configuration, a first time period in which the first access network device sends a downlink signal through the first channel and a second time period in which the first access network device receives an uplink signal through the first channel.

The transmitter 45 is specifically configured to: send the downlink signal based on the maximum transmit power value through the first channel in the first time period; and/or send second scheduling information to an access network device located in the signal coverage area of the first access network device. The second scheduling information is used to instruct the access network device located in the signal coverage area of the first access network device to send an uplink signal to the first access network device through the first channel in the second time period.

In another possible implementation, after the processor 42 determines, based on the first uplink-downlink subframe configuration, the first time period in which the first access network device sends a downlink signal through the first channel and the second time period in which the first access network device receives an uplink signal through the first channel, the processor 42 is further configured to:
determine second uplink-downlink subframe configuration based on the first time period in which the first access network device sends a downlink signal through the first channel and the second time period in which the first access network device receives an uplink signal through the first channel.

Correspondingly, the second information further includes the second uplink-downlink subframe configuration.

In another possible implementation, the processor is specifically configured to:
determine, as the second power value, a power value for receiving the first information.

The access network device provided in this application may execute the technical solution shown in the foregoing method embodiment. An implementation principle and a beneficial effect of the access network device are similar to those of the foregoing method embodiment, and details are not described herein.

This application further provides a signal transmission system, including the access network device shown in the embodiment of FIG. 9 and the access network device shown in the embodiment of FIG. 10 or FIG. 11.

A person of ordinary skill in the art may understand that all or some of the steps of the method embodiments may be implemented by a program instructing related hardware. The program may be stored in a computer readable storage medium. When the program runs, the steps of the method embodiments are performed. The foregoing storage medium includes any medium that can store program code, such as a ROM, a RAM, a magnetic disk, or an optical disc.

## Claims

1. A signal transmission method, wherein the method comprises:
determining, by a second access network device, that a first channel is idle; and
sending, by the second access network device, first information that is used to indicate occupancy of the first channel, wherein the first information comprises a first power value and first duration, and
the first power value is power used by the second access network device to send a signal through the first channel in the first duration.

2. The method according to claim 1, wherein before the determining, by a second access network device, that a first channel is idle, the method further comprises:
determining, by the second access network device, that there is a to-be-transmitted signal; and
performing detection, by the second access network device, on the first channel.

3. The method according to claim 1 or 2, wherein after the first duration ends, the second access network device stops sending a signal through the first channel.

4. The method according to any one of claims 1 to 3, wherein the first information further comprises uplink-downlink subframe configuration, and
the uplink-downlink subframe configuration is used to indicate a time period in which the second access network device sends a downlink signal through the first channel and a time period in which the second access network device receives an uplink signal through the first channel.

5. The method according to any one of claims 1 to 4, wherein the determining, by a second access network device, that a first channel is idle comprises:
obtaining, by the second access network device, energy received on the first channel, and determining that the energy received on the first channel is less than a preset threshold; or
determining, by the second access network device, that information used to indicate occupancy of the first channel in the first preset duration is not received.

6. A signal transmission method, wherein the method comprises:
receiving, by a first access network device, first information sent by a second access network device, wherein the first information comprises a first power value and first duration; and
determining, by the first access network device, a second power value, wherein the second power value is a power value that is received by the first access network device in the first duration and that is used by the second access network device to transmit a signal through a first channel, and
the first power value and the second power value are used by the first access network device to compute path loss information between the first access network device and the second access network device.

7. The method according to claim 6, wherein after the determining, by the first access network device, a second power value, the method further comprises:
determining, by the first access network device, a preset maximum interference power value; and
determining, by the first access network device, a maximum transmit power value of the first access network device based on the path loss information and the preset maximum interference power value.

8. The method according to claim 7, wherein after the determining, by the first access network device, a maximum transmit power value of the first access network device based on the path loss information and the preset maximum interference power value, the method further comprises:
determining, by the first access network device based on the maximum transmit power value, whether the first channel needs to be occupied; and
if yes, sending, by the first access network device, a signal based on the maximum transmit power value through the first channel in second duration.

9. The method according to claim 8, wherein the determining, by the first access network device based on the maximum transmit power value, whether the first channel needs to be occupied comprises:
determining, by the first access network device, a signal coverage area of the first access network device based on the maximum transmit power value;
determining, by the first access network device, whether there is a third access network device in the signal coverage area, wherein there is a to-be-transmitted signal between the third access network device and the first access network device; and
if yes, determining, by the first access network device, that the first channel needs to be occupied.

10. The method according to claim 9, wherein the sending, by the first access network device, a signal based on the maximum transmit power through the first channel comprises:
sending, by the first access network device, the to-be-transmitted signal or first scheduling information to the third access network device by using an actual transmit power value that is less than or equal to the maximum transmit power value through the first channel in the second duration, wherein
the first scheduling information is used to instruct the third access network device to send the to-be-transmitted signal to the first access network device through the first channel.

11. The method according to claim 10, wherein the sending, by the first access network device, the to-be-transmitted signal or first scheduling information to the third access network device by using an actual transmit power value that is less than or equal to the maximum transmit power value through the first channel in the second duration comprises:
obtaining, by the first access network device, a distance between the third access network device and the first access network device;
determining, by the first access network device, the actual transmit power value based on the distance between the third access network device and the first access network device; and
when the to-be-transmitted signal is a signal that needs to be sent by the first access network device, sending, by the first access network device, the to-be-transmitted signal to the third access network device by using the actual transmit power value through the first channel; or
when the first scheduling information is a signal that needs to be sent by the first access network device, sending, by the first access network device, the first scheduling information to the third access network device by using the actual transmit power value through the first channel.

12. The method according to claim 11, wherein after the determining, by the first access network device, the actual transmit power value based on the distance between the third access network device and the first access network device, the method further comprises:
sending, by the first access network device, second information, wherein the second information comprises the actual transmit power value and the second duration.

13. The method according to claim 12, wherein the first information further comprises first uplink-downlink subframe configuration, and the uplink/downlink subframe is used to indicate a time period in which the second access network device sends a downlink signal through the first channel and a time period in which the second access network device receives an uplink signal through the first channel; and
the sending, by the first access network device, a signal based on the maximum transmit power value through the first channel comprises:
determining, by the first access network device based on the first uplink-downlink subframe configuration, a first time period in which the first access network device sends a downlink signal through the first channel and a second time period in which the first access network device receives an uplink signal through the first channel;
sending, by the first access network device, the downlink signal based on the maximum transmit power value through the first channel in the first time period; and/or
sending, by the first access network device, second scheduling information to an access network device located in the signal coverage area of the first access network device, wherein the second scheduling information is used to instruct the access network device located in the signal coverage area of the first access network device to send an uplink signal to the first access network device through the first channel in the second time period.

14. The method according to claim 13, wherein after the determining, by the first access network device based on the first uplink-downlink subframe configuration, a first time period in which the first access network device sends a downlink signal through the first channel and a second time period in which the first access network device receives an uplink signal through the first channel, the method further comprises:
determining, by the first access network device, second uplink-downlink subframe configuration based on the first time period in which the first access network device sends a downlink signal through the first channel and the second time period in which the first access network device receives an uplink signal through the first channel; and
the second information further comprises the second uplink-downlink subframe configuration.

15. The method according to any one of claims 6 to 14, wherein the determining, by the first access network device, a second power value comprises:
determining, by the first access network device as the second power value, a power value for receiving the first information.

16. A signal transmission apparatus, comprising a first determining module and a sending module, wherein
the first determining module is configured to determine that a first channel is idle; and
the sending module is configured to send first information that is used to indicate occupancy of the first channel, wherein the first information comprises a first power value and first duration, and
the first power value is power used by the second access network device to send a signal through the first channel in the first duration.

17. The apparatus according to claim 16, wherein the apparatus further comprises a second determining module and a detection module, wherein
the second determining module is configured to: before the first determining module determines that the first channel is idle, determine that there is a to-be-transmitted signal; and
the detection module is configured to perform detection on the first channel.

18. The apparatus according to claim 16 or 17, wherein after the first duration ends, the sending module stops sending a signal through the first channel.

19. The apparatus according to any one of claims 16 to 18, wherein the first information further comprises uplink-downlink subframe configuration, and
the uplink-downlink subframe configuration is used to indicate a time period in which the second access network device sends a downlink signal through the first channel and a time period in which the second access network device receives an uplink signal through the first channel.

20. The apparatus according to any one of claims 16 to 19, wherein the first determining module is specifically configured to:
obtain energy received on the first channel, and determine that the energy received on the first channel is less than a preset threshold; or
determine that information used to indicate occupancy of the first channel in the first preset duration is not received.

21. A signal transmission apparatus, comprising a receiving module, a first determining module, wherein
the receiving module is configured to receive first information sent by a second access network device, wherein the first information comprises a first power value and first duration; and
the first determining module is configured to determine a second power value, wherein the second power value is a power value that is received by a first access network device in the first duration and that is used by the second access network device to transmit a signal through a first channel, and
the first power value and the second power value are used by the first access network device to compute path loss information between the first access network device and the second access network device.

22. The apparatus according to claim 21, wherein the apparatus further comprises a second determining module and a third determining module, wherein
the second determining module is configured to: after the first determining module determines the second power value, determine a preset maximum interference power value; and
the third determining module is configured to determine a maximum transmit power value of the first access network device based on the path loss information and the preset maximum interference power value.

23. The apparatus according to claim 22, wherein the apparatus further comprises a judging module and a sending module, wherein
the judging module is configured to: after the third determining module determines the maximum transmit power value of the first access network device based on the path loss information and the preset maximum interference power value, determine, based on the maximum transmit power value, whether the first channel needs to be occupied; and
the sending module is configured to: when the judging module determines that the first channel needs to be occupied, send a signal based on the maximum transmit power value through the first channel in second duration.

24. The apparatus according to claim 23, wherein the judging module is specifically configured to:
determine a signal coverage area of the first access network device based on the maximum transmit power value;
determine whether there is a third access network device in the signal coverage area, wherein there is a to-be-transmitted signal between the third access network device and the first access network device; and
if yes, determine that the first channel needs to be occupied.

25. The apparatus according to claim 24, wherein the sending module is specifically configured to:
send the to-be-transmitted signal or first scheduling information to the third access network device by using an actual transmit power value that is less than or equal to the maximum transmit power value through the first channel in the second duration, wherein
the first scheduling information is used to instruct the third access network device to send the to-be-transmitted signal to the first access network device through the first channel.

26. The apparatus according to claim 25, wherein the sending module is specifically configured to:
obtain a distance between the third access network device and the first access network device;
determine the actual transmit power value based on the distance between the third access network device and the first access network device; and
when the to-be-transmitted signal is a signal that needs to be sent by the first access network device, send the to-be-transmitted signal to the third access network device by using the actual transmit power value through the first channel; or
when the first scheduling information is a signal that needs to be sent by the first access network device, send the first scheduling information to the third access network device by using the actual transmit power value through the first channel.

27. The apparatus according to claim 26, wherein:
the sending module is further configured to send second information after the sending module determines the actual transmit power value based on the distance between the third access network device and the first access network device, wherein the second information comprises the actual transmit power value and the second duration.

28. The apparatus according to claim 27, wherein the first information further comprises first uplink-downlink sub frame configuration, and the uplink/downlink subframe is used to indicate a time period in which the second access network device sends a downlink signal through the first channel and a time period in which the second access network device receives an uplink signal through the first channel; and
the sending module is specifically configured to:
determine, based on the first uplink-downlink subframe configuration, a first time period in which the first access network device sends a downlink signal through the first channel and a second time period in which the first access network device receives an uplink signal through the first channel;
send the downlink signal based on the maximum transmit power value through the first channel in the first time period; and/or
send second scheduling information to an access network device located in the signal coverage area of the first access network device, wherein the second scheduling information is used to instruct the access network device located in the signal coverage area of the first access network device to send an uplink signal to the first access network device through the first channel in the second time period.

29. The apparatus according to claim 28, wherein the apparatus further comprises a fourth determining module, wherein
the fourth determining module is configured to: after the sending module determines, based on the first uplink-downlink subframe configuration, the first time period in which the first access network device sends a downlink signal through the first channel and the second time period in which the first access network device receives an uplink signal through the first channel, determine second uplink-downlink subframe configuration based on the first time period in which the first access network device sends a downlink signal through the first channel and the second time period in which the first access network device receives an uplink signal through the first channel; and
correspondingly, the second information further comprises the second uplink-downlink subframe configuration.

30. The apparatus according to any one of claims 21 to 29, wherein the first determining module is specifically configured to:
determine, as the second power value, a power value for receiving the first information.

31. An access network device, comprising a processor, a transmitter, a memory, and a communications bus, wherein the memory stores a program instruction, the processor is configured to read and execute the program instruction in the memory, and the communications bus is configured to connect components;
the processor is configured to determine that a first channel is idle;
the transmitter is configured to send first information that is used to indicate occupancy of the first channel, wherein the first information comprises a first power value and first duration; and
the first power value is power used by the second access network device to send a signal through the first channel in the first duration.

32. An access network device, comprising a receiver, a processor, a memory, and a communications bus, wherein the memory stores a program instruction, the processor is configured to read and execute the program instruction in the memory, and the communications bus is configured to connect components;
the receiver is configured to receive first information sent by a second access network device, wherein the first information comprises a first power value and first duration;
the processor is configured to determine a second power value, wherein the second power value is a power value that is received by the first access network device in the first duration and that is used by the second access network device to transmit a signal through a first channel, and
the first power value and the second power value are used by the first access network device to compute path loss information between the first access network device and the second access network device.

33. A signal transmission system, comprising the access network devices according to claim 31 and claim 32.
